## Europäisches Patentamt

## European Patent Office

## Office européen des brevets

(11) Numéro de publication: **0 087 331**
**B1**

## FASCICULE DE BREVET EUROPÉEN

(45) Date de publication du fascicule du brevet:
**13.08.86**

(51) Int. Cl.⁴: **F 16 L 37/28**

(21) Numéro de dépôt: **83400162.0**

(22) Date de dépôt: **24.01.83**

(54) Perfectionnement aux raccords de canalisations avec clapet du type à boulet tournant.

(30) Priorité: **15.02.82 FR 8202446**

(43) Date de publication de la demande:
**31.08.83 Bulletin 83/35**

(45) Mention de la délivrance du brevet:
**13.08.86 Bulletin 86/33**

(84) Etats contractants désignés:
**AT BE CH DE GB IT LI LU NL SE**

(56) Documents cité:
**FR-A-2 028 653**
**US-A-3 078 068**
**US-A-3 423 063**
**US-A-3 606 244**

(73) Titulaire: **Fremy, Raoul, Résidence Carlina 5 Boulevard Colbert, F-92330 Sceaux (FR)**

(72) Inventeur: **Fremy, Raoul, Résidence Carlina 5 Boulevard Colbert, F-92330 Sceaux (FR)**

(74) Mandataire: **Lemonnier, André, 4 Boulevard Saint-Denis, F-75010 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

La présente invention concerne les raccords de
canalisation dans lesquels un embout mâle est
engagé dans un embout femelle, l'engagement
assurant l'ouverture d'un clapet prévu sur au
moins l'un de ces éléments, le clapet étant du type
à boule tournant. Dans un clapet de ce type, un
élément d'obturation de forme généralement
sphérique est monté dans un élément de raccord
avec son centre coïncidant avec l'axe du canal de
passage du fluide à contrôler, cet élément
sphérique qui prend appui sur un siège au
débouché du canal dans la chambre de clapet
comportant un alésage diamétral lequel peut, par
des moyens adéquats, être amené en coïncidence
avec le canal de passage du fluide pour assurer
l'ouverture du clapet ou orienté sensiblement à
90° pour assurer la fermeture du clapet.

Un raccord à clapet de ce type est décrit dans
US-A-3.423.063 et US-A-4.181.149. D'une manière
typique les moyens assurant la rotation du boulet
autour d'un axe transversal à l'axe du canal de
passage du fluide sont constitués par une glissière
de guidage formant un angle avec ledit axe,
réalisée dans l'élément d'obturation sphérique
coopérant avec un téton de guidage solidaire
d'une pièce qui, lors des opérations
d'accouplement et de désaccouplement, est
soumise à un déplacement longitudinal relatif par
rapport à la pièce portant le siège de l'élément
obturateur et l'élément obturateur lui-même. Une
variante suggérée par le brevet U.S. N° 3.078.065
consiste à rendre l'axe formant les tétons de
guidage solidaire de l'élément d'obturation
sphérique et à réaliser les glissières de guidage
pour ces tétons dans la pièce qui est soumise au
déplacement longitudinal relatif.

L'intérêt des clapets de ce type est qu'ils
permettent de réaliser en position d'ouverture, un
passage de section pratiquement constante si
l'alésage de l'élément d'obturation présente la
même section que le canal de passage du fluide
dans l'élément de raccord. En outre la section du
passage est importante relativement au diamètre
puisque, si la rotation de l'élément d'obturation
sphérique est de 90°, le diamètre de l'alésage peut
atteindre d x sin

FIG15/20

dans laquelle <u>d</u> est le diamètre de l'élément
sphérique et <u>e</u> la largeur de l'arc de la portée du
siège, c'est-à-dire que pour <u>e</u> faible on obtient
avec une bonne approximation un diamètre de
l'alésage égale à 0,7d - 0,7e. Toutefois avec une
portée de siège de largeur réduite, il est
nécessaire de guider l'élément sphérique pour
que son plan de rotation passe par l'axe du
passage ot soit perpendiculaire à l'axe des tétons.
On risque autrement que l'alésage ou la calotte
assurant l'obturation ne soient pas en coïncidence avec le siège, ce qui provoquerait une fuite. Pour y
remédier et comme décrit dans le brevet U.S.
4.181.149 il est nécessaire de prévoir des moyens
de guidage qui fixent l'axe de rotation de l'organe
d'obturation sphérique. Ceci oblige à une
construction complexe avec usinage sur l'élément
d'obturation sphérique de faces sécantes
parallèles au plan de rotation sur lesquelles sont
réalisés les bouts d'axe définissant l'axe de
rotation, les portées devant de plus être réalisées
dans des éléments de guidage coulissant dans des
glissières. Ces éléments situés latéralement à
l'élément d'obturation sphérique accroissent
l'encombrement diamétral de l'ensemble formant
clapet donc le diamètre du raccord. En outre
l'automatisme ne peut être obtenu que moyennant
un ressort de rappel qui sollicite l'élément
d'obturation sphérique et la pièce portant le siège
contre la poussée d'emboîtement des éléments du
raccord. Dans le brevet U.S. N° 4.181.149, cette
poussée est transmise par l'intermédiaire des
éléments de guidage des bouts d'axe de l'élément
obturateur et en réalité, du fait du jeu nécessaire
pour que l'organe obturateur s'applique
correctement sur le siège, par les bouts d'axe, la
bille et le siège. Les bouts d'axe sont de ce fait
soumis à une charge élevée par unité de surface
et à une usure correspondante.

La présente invention a pour but de remédier à
ces inconvénients en réalisant les moyens de
guidage à l'intérieur du volume de l'élément
d'obturation sphérique et en transmettant la
poussée du ressort de rappel audit élément
d'obturation sphérique par une portée en calotte
sphérique.

L'invention a été rendue possible par le fait que
seule une calotte sphérique de l'élément
d'obturation assure en fait l'obturation et que seul
un secteur en zone sphérique d'environ 180°,
appelé ci-après secteur en zone sphérique actif,
se deplace au contact du siège.

Conformément à l'invention le clapet comporte
un fût axial fixe placé au fond du corps de
l'élément de raccord, dirigé vers la sortie du
raccord et alésé au diamètre du passage du
raccord, ce fût présentant à son extrémité
correspondante au fond du corps une portée pour
le ressort de rappel et, à son autre extrémité un
flasque radial dont les deux faces latérales
tangentent la surface extérieure du fût, un
chambrage débouchant dans le secteur en zone
sphérique opposé au secteur actif étant réalisé
dans l'élément d'obturation sphérique, ce
chambrage comportant des surfaces coopérant en
contact glissant avec les faces latérales du flasque
du fût et l'axe d'entrainement en rotation de
l'élément d'obturation étant porté par le flasque
du fût et perpendiculaire auxdites faces.

Selon une autre caractéristique de l'invention et
en bénéficiant du fait qu'aucun organe de guidage
ou d'entraînement en rotation ne se trouve en
saillie par rapport à l'enveloppe sphérique de
l'organe d'obturation, le siège d'obturation est
forme dans un logement hémi-sphérique
au'diamètre de l'élément d'obturation réalisé dans la pièce portant le siège et la poussée du ressort de rappel est transmise par une bague cylindrique entourant le fût et se terminant par une portée en zone sphérique prolongeant le logement hémisphérique de l'élément portant le siège.

Avec l'invention, le guidage de l'élément d'obturation sphérique est assuré par l'emboîtement sphérique de la bille entre la pièce portant le siège et la bague cylindrique de poussée.

D'autres caractéristiques de la présente invention apparaîtront à la lecture de la description détaillée d'un mode de réalisation faite ci-après avec référence aux dessins ci-annexés dans lesquels:

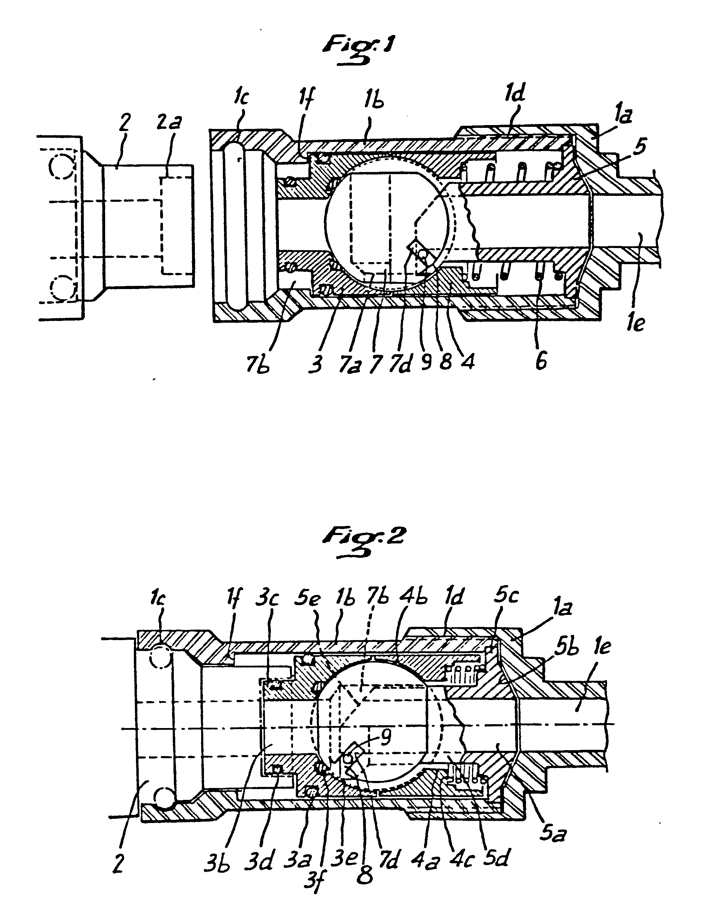

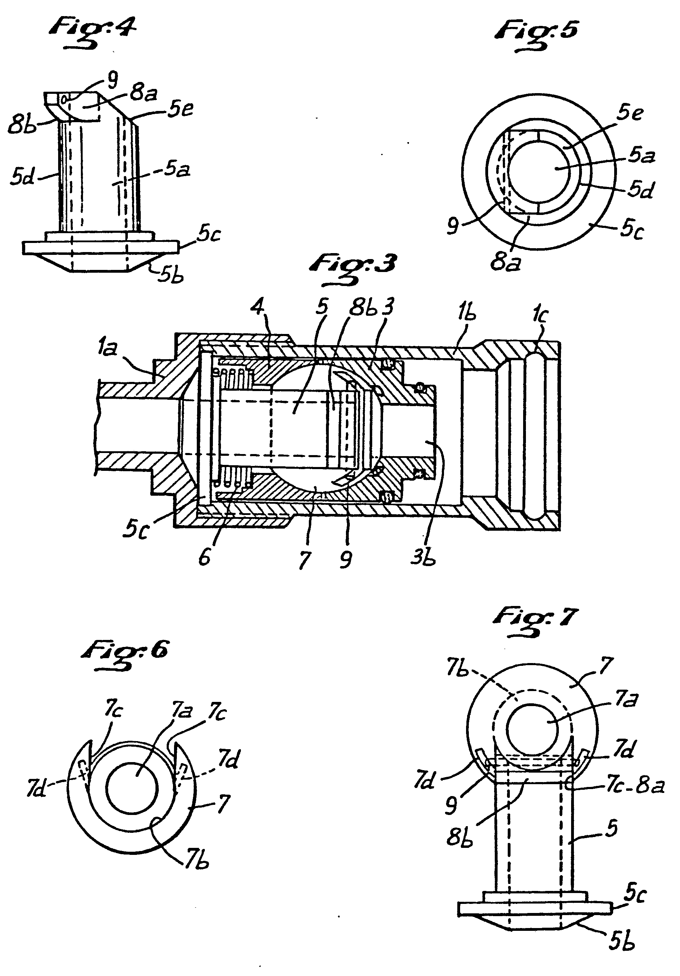

La figure 1 est une vue en coupe longitudinale partielle d'un embout de raccord femelle dans la position de fermeture du clapet; la figure 2 est une vue analogue dans la position d'ouverture; la figure 3 est une vue en coupe partielle par III-III de figure 2, la figure 4 est une vue en élévation du fût, la figure 5 en est une vue en bout, la figure 6 est une vue en bout de l'élément d'obturation sphérique par VI-VI de figure 2 et la figure 7 est une vue par VII-VII de figure de l'élément d'obturation sphérique et du fût.

Dans les dessins la référence 1 désigne le corps du raccord, 1a étant la souche qui comporte des moyens de fixation sur une canalisation, ces moyens étant d'un type quelconque connu et non représentés, 1b étant la chemise tubulaire du corps qui porte des moyens de clavetage, ici une gorge 1c, avec l'autre élément du raccord, ici l'élément mâle 2 représenté schématiquement. La souche 1a et la chemise tubulaire 1b sont assemblées par un filetage 1d. 1e designe le passage pour 1e fluide réalisé dans la souche et 1f un redan à l'extrémité frontale de la partie de la chemise tubulaire, redan qui délimite la chambre à clapet. Dans la chambre à clapet sont logés la pièce porte-siège 3, la bague de poussée 4, le fût 5, le ressort de rappel 6 et l'élément d'obturation sphérique 7.

La pièce porte-siège 3 est une bague cylindrique qui coulisse de façon étanche grâce à un joint 3a dans la chambre à clapet. Elle comporte un forage axial 3b dont la section correspond à celle du passage 1e, l'extrémité frontale étant décolletée pour former un nez 3c qui vient s'engager dans un suralésage 2a à l'extrémité de l'élément 2, l'étanchéité étant assurée par un joint 3d. La face opposée ou arrière de la pièce 3 est usinée en portée hémi-sphérique 3e au diamètre de l'élément d'obturation 7 et le siège est constitué par un joint 3f.

La bague de poussée 4 coulisse librement dans la chambre de clapet, elle comporte un forage axial 4a dont le diamètre permet l'engagement de la tête du fût 5. Sa face avant est usinée en zone 4b au diamètre de l'élément d'obturation 7 et sa face arrière forme une portée 4c pour le ressort 6 qui est un ressort à boudin.

Le fût 5 comporte un alésage axial 5a ayant la même section que le passage 1e. Sa face arrière 5b s'adapte dans le fond de la souche 1a et elle est entourée par une collerette 5c cui est serrée entre la face d'extrémité de la chemise 1b et le fond de la souche 1a. La face avant de la collerette 5c forme portée pour le ressort 6. Le fût 5d proprement dit est cylindrique mais il présente à son extrémité un flasque radial 8 dont les deux faces latérales parallèles 8a sont tangentes au cylindre extérieur du fût 5d. L'arête arrière 8b du flasque radial est chanfreinée en secteur de zone pour autoriser une course suffisante de la tête du fût dans le logement sphérique de l'organe obturateur sans interférer avec la paroi de ce logement. De même, le fût est chanfreiné en 5e pour permettre la rotation de l'élément d'obturation. La tête du fut porte d'autre part un bout d'axe ou broche 9 qui est perpendiculaire aux faces 8 et qui est situé de manière à se trouver dans les deux plans diamétraux à 45° du logement sphérique pour les deux positions extrêmes du claret, savoir celle où la pièce porte-siège 3 est en appui sur le redan 1f et celle où elle est repoussée par l'enfoncement de l'élément de raccord 2 (figures 1 et 2).

L'élément d'obturation sphérique 7 comporte un alésage d'axe diamétral 7a dont la section correspond à celle du passage 1e et un chambrage défini par un suralésage 7b coaxial à du fût 5d et par une saignée à faces parallèles 7c dont l'écartement est égal à l'épaisseur du flasque radial 8 de manière que les faces 8a puissent coulisser à frottement doux entre les faces 7c. La saignée 7e et le suralésage 7b sont limités à sensiblement la pénétration du fût 5 dans l'organe d'obturation sphérique pour la position d'ouverture du clapet représentée à la figure 2. Une saignée 7d selon un plan diamétral à 45° est réalisée dans l'organe d'obturation sphérique, cette saignée 7d étant perpendiculaire aux faces 7c et située dans le plan radial à 45° voisin du débouché de l'alésage 7a. La largeur de cette saignée est sensiblement égale au diamètre de la broche 9 et sa profondeur au moins égale à la hauteur de la calotte sphérique délimitée par le plan de la trajectoire de la broche 9.

Le fonctionnement est analogue à celui des dispositifs à clapet sphérique rotatif du même type savoir, en partant de la position représentée à la figure 1, l'accouplement du raccord réalisé par l'enfoncement du nez de l'élément 2 fait reculer la pièce porte-siège 3 et la bague de poussée 4 contre l'action du ressort 6. L'élément d'obturation sphérique pris dans le logement réalisé entre la pièce porte-siège 3 et la bague de poussée 4, recule également et la broche 9 qui est fixe puisque solidaire du fût exerce une pression sur la face avant de la saignée 7d, ce qui assure la rotation de l'élément d'obturation sphérique jusqu'à l'alignement des forages 3b, 7a, 5a et 1e, ce qui donne un passage en ligne droite de section constante pour le fluide. Lors du désaccouplement l'ensemble des pièces 3 et 4 et de l'élément obturateur 7 est repoussé par le ressort 6 et la broche 9 prend appui contre la face arrière de la saignée 7d pour faire tourner l'élément obturateur en sens inverse de 90°, ce qui ramène une calotte plane en coïncidence avec le siège. Les deux mouvements sont guidés avec précision du fait du coulissement à frottement doux entre les faces 8a et 7c.

On a décrit ci-dessus un mode de réalisation préférentiel du clapet à élément d'obturation sphérique conforme à l'invention mais des variantes de réalisation sont possibles sans sortir du cadre de la présente invention. C'est ainsi que la broche 9 peut être montée sur la bille, avec une fente ou une boutonnière de guidage de préférence perpendiculaire à l'axe du fût réalisée dans les faces 8a. L'invention pourrait être appliquée à une vanne à obturation cylindrique, le joint du siège 3f peut être porté par l'élément obturateur sphérique 7, etc.

## Revendications

1. Un raccord de canalisation avec clapet du type à boulet tournant dans lequel un élément d'obturation (7) de forme généralement sphérique est monté dans un élément de raccord (1) avec son centre coincidant avec l'axe du canal de passage (1e) du fluide a contrôler, cet élément sphérique qui prend appui sur un siège (3f) au débouché du canal dans la chambre de clapet comportant un alésage diamétral (7a) lequel peut, par des moyens adéquats, être amené en coïncidence avec le canal (le) de passage de fluide pour assurer l'ouverture du clapet ou être orienté sensiblement à 90° pour assurer la fermeture du clapet, caractérisé en ce que le clapet comporte un fût axial fixe (5) placé au fond du corps (1) de l'élément de raccord, dirigé vers la sortie du raccord et alésé (5a) au diamètre du passage (1e) du raccord, ce fût présentant à son extrémité correspondante au fond du corps une portée pour le ressort de rappel et à son autre extrémité un flasque radial (8) dont les deux faces latérales (8a) tangentent la surface extérieure du fût, un chambrage débouchant dans le secteur en zone sphérique opposé au secteur actif étant réalisé dans l'élément d'obturation sphérique, ce chambrage comportant des surfaces (7c) coopérant en contact glissant avec les faces latérales (8a) du flasque (8) du fût et l'axe (9) d'entraînement en rotation de l'élément d'obturation (7) étant porté par le flasque (8) du fût et perpendiculaire auxdites faces (8a-7c).

2. Un raccord de canalisation selon la revendication 1, caractérisé en ce que le siège d'obturation est formé dans un logement hémisphérique (3e) au diamètre de l'élément d'obturation réalisé dans la pièce (3) portant le siège et la poussée du ressort de rappel (6) est transmise par une bague cylindrique (4) entourant le fût (5)et se terminant par une portée en zone sphérique (4b) prolongeant le logement hémisphérique (3e) de l'élément portant le siege.

3. Un raccord de canalisation selon l'une quelconque des revendications 1 et 2, caractérisé en ce que le siège est constitué par un joint (3f) entourant le débouché de l'alésage axial (3b) dans le fond de la chambre hémisphérique (3e).

4. Un raccord de canalisation selon l'une quelconque des revendications 1 à 3, caractérisé en ce que l'arête arrière (8b) du flasque radial (8) est chanfreinée en secteur de zone.

5. Un raccord de canalisation selon l'une quelconque des revendications 1 à 4, caractérisé en ce que l'extrémité du fût (5) est chanfreinée en (5e) à l'opposé du flasque (8).

6. Un raccord de canalisation selon l'une quelconque des revendications 1 à 5, caractérisé en ce que la tête de fût porte une broche (9) fixe perpendiculaire aux faces (8a) située de manière à se trouver dans les deux plans diamétraux à 45° du logement sphérique pour les deux positions extrêmes du clapet, et l'élément d'obturation sphérique (7) présente une saignée (7d) selon un plan diamétral à 45°, cette saignée (7d) étant perpendiculaire aux faces (7c) et située dans le plan radial à 45° voisin du débouché de l'alésage (7a)

7. Un raccord de canalisation selon l'une quelconque des revendications 1 à 5, caractérisé en ce que la tête du fût présente une fente ou une boutonnière sensiblement perpendiculaire à l'axe du fût (5) au niveau du flasque (8) et l'élément d'obturation sphérique (7) comporte une broche (9) fixe engagée dans ladite fente ou boutonnière et située dans le plan radial à 45° voisin du débouché de l'alésage (7a).

## Patentansprüche

1. Rohrkupplung mit drehbarem Kugelventil, bei welchem ein im allgemeinen kugelförmiges Verschlußelement (7) in einem Kupplungselement (1) mit seiner Mitte koinzidierend mit der Achse des Kanals (1e) für den Durchgang für das zu kontrollierenden Fluid angeordnet ist, wobei dieses kugelförmige Element das an einen Sitz (3f) am Ausgang des Kanals in der Ventilkammer zur Anlage kommt, eine diametrale Bohrung (7a) aufweist, welche, mittels adäquater Mittel, in Koinzidenz mit dem Kanal (1e) fur den Durchgang des Fluids gebracht werden kann, um das Öffnen des Ventils zu gewährleisten, oder annähernd um 90° gedreht werden kann, um das Verschließen des Ventils zu gewährleisten, dadurch gekennzeichnet, daß das Ventil einen feststehenden axialen Schaft (5), der am Boden des Körpers des Kupplungselementes angeordnet, zum Ausgang der Kupplung gerichtet und mit dem Durchmesser des Durchgangs (1e) der Kupplung ausgebohrt (5a) ist, wobei dieser Schaft an seinem dem Boden des Körpers entsprechenden Ende eine Auflagefläche für die Spannfeder und an seinem anderen Ende eine radiale Backe (8) aufweist, deren zwei Seitenflächen (8a) die Außenfläche des Schaftes berühren, eine Einsenkung, die in dem Sektor in Form einer Kugelschichte, der dem aktiven Sektor, der im kugelförmigen Verschlußelement hergestellt ist, gegenüberliegt, mündet, wobei diese Einsenkung Flächen (7c) aufweist, die in Berührung gleitend mit den Seitenflächen (8a) der Backe (8) des Schaftes zusammenwirken, und die Achse (9) für die Rotationsmitnahme des Verschlußelementes (7) aufweist, die von der Backe (8) des Schaftes getragen wird und im rechten Winkel auf besagte Flächen (8a, 7c) steht.

2. Rohrkupplung nach Anspruch 1, dadurch gekennzeichnet, daß der Sitz für den Verschluß in einem halbkugelförmigen Gehäuse (3e) mit dem Durchmesser des Verschlußelementes ausgebildet ist, wobei es in dem Einsatz (3), der den Sitz trägt, hergestellt ist, und daß der Schub der Spannfeder (6) durch einen zylindrischen Ring (4) übertragen wird, der den Schaft (5) umgibt und in einer Auflagerfläche in Form einer Kugelschichte (4b) endet, die das halbkugelförmige Gehäuse (3e) des Elementes, das den Sitz trägt, verlängert.

3. Rohrkupplung nach einem der Ansprüche 1 und 2, dadurch gekennzeichnet, daß der Sitz durch eine Dichtung (3f) gebildet wird, die die Mündung der axialen Bohrung (3b) im Boden der halbkugelförmigen Kammer (3e) umgibt.

4. Rohrkupplung nach einem der Ansprüche 1 bis 3, dadurch gekennzeichnet, daß die hintere Kante (8b) der radialen Backe (8) als Kugelausschnittstreifen abgeschrägt ist.

5. Rohrkupplung nach einem der Ansprüche 1 bis 4, dadurch gekennzeichnet, daß das Ende des Schaftes (5) in (5e) im Gegensatz zur Backe (8) abgeschrägt ist.

6. Rohrkupplung nach einem der Ansprüche 1 bis 5, dadurch gekennzeichnet, daß der Kopf des Schaftes einen rechtwinkelig auf die Flächen (8a) faststehenden Dorn (9) trägt, der in der Art angeordnet ist, um sich in den zwei Diametralebenen des kugelförmigen Gehäuses unter 45° für die zwei extremen Positionen des Ventils zu befinden, und daß das kugelförmige Verschlußelement (7) einen Einschnitt (7d) gemäß einer Diamatralebene unter 45 aufweist, wobei dieser Einschnitt (7d) im rechten Winkel auf die Flächen (7c) verläuft und in der der Mündung der Bohrung (7a) benachbarten Radialebene unter 45 angeordnet ist.

7. Rohrkupplung nach einem der Ansprüche 1 bis 5, dadurch gekennzeichnet, daß der Kopf des Schaftes einen Schlitz oder ein Knopfloch annähernd im rechten Winkel zur Achse des Schaftes (5) auf der Höhe der Backe (8) aufweist und daß das kugelförmige Verschlußelement (7) einen fixen Dorn (9) aufweist, der in besagtem Schlitz oder Knopfloch einrastet und der in der Mündung der Bohrung (7a) benachbarten Radialebene unter 45° angeordnet ist.

## Claims

1. A pipe coupling with a rotating ball type valve, in which a closure element (7) of generally spherical shape is mounted in a coupling element (1), with its center in coincidence with the axis of the passage channel (1e) for the fluid to be controlled, said spherical element bearing against a seat (3f) at the opening of the channel in the valve chamber and having a diametrical bore (7a) which can be brought by appropriate means into register with the passage channel (1e) for the fluid for opening the valve, or be oriented at an angle of substantially 90° to provide the closing of the valve, wherein the valve comprises a fixed axial shaft (5) placed at the bottom of the body (L) of the coupling element, oriented toward the outlet of the coupling and bored (5a) to the diameter of the passage (1e) of the coupling, said shaft having at its end corresponding to the bottom of the body a support surface for a return spring and, at its other end, a radial flange (8) the two side walls (8a) of which are tangent to the outer surface of the shaft, a chamber opening into a spherical shaped sector opposite the active sector being provided in the spherical closure element, said chamber having surfaces (7c) cooperating in sliding contact with the side faces (8a) of the flange (8) of the shaft and the axis (9) for driving in rotation the closure element (7) being carried by the flange (8) of the shaft and being perpendicular to said faces (8a-7c).

2. A pipe coupling according to claim l, wherein the closure seat is formed in a hemispherical housing (3e) having the diameter of the closure element provided in the part (3) forming the seat and the thrust from the return spring (6) is transmitted by a cylindrical ring (4) surrounding the shaft (5) and terminating in a support surface in the shape of a sector area (4b) in continuation of the hemispherical housing (3e) of the element carrying the seat.

3. A pipe coupling according to any one of claims 1 and 2, wherein the seat is formed by a seal (3f) surrounding the opening of the axial bore (3b) in the bottom of the hemispherical chamber (3e).

4. A pipe coupling according to any one of claims 1 to 3, wherein the rear edge (8b) of the radial flange (8) is chamfered in the shape of a sector area.

5. A pipe coupling according to any one of claims 1 to 4, wherein the end of the shaft (5) is chamfered at (5e) on the side opposite the flange (8).

6. A pipe coupling according to any one of claims 1 to 5, wherein the shaft head carries a fixed pin (9) perpendicular to the faces (8a), located so as to be in the two diametrical planes at 45° of the spherical enclosure for the two extreme positions of the valve, and the spherical closure element (7) is formed with a cut (7d) along a diametrical plane at 45°, said cut (7d) being perpendicular to the faces (7c) and being situated in the radial plane at 45° close to the opening of bore (7a).

7. A pipe coupling according to any one of claims 1 to 5, wherein the shaft head is formed with a slot or buttonhole substantially perpendicular to the axis of shaft (5) at the level of flange (8) and the spherical enclosure element (7) comprises a fixed pin (9) engaged into said slot or buttonhole and situated in the radial plane at 45° close to the opening of bore (7a).

Fig.1

Fig.2

Fig.4

Fig.5

Fig.3

Fig.6

Fig.7